# EUROPEAN PATENT APPLICATION

(11) **EP 2 082 929 A1**
(43) Date of publication of application: **29.07.2009**
(21) Application number: 07823030.7
(22) Date of filing: 05.11.2007
(51) Int. Cl.: B60S 3/06

(54) **VEHICLE WASHING METHOD AND CORRESPONDING INSTALLATION**

(30) Priority: 07.11.2006 ES 200602820
(71) Applicant: Istobal S.A., 46250 La Alcudia (Valencia) (ES)
(72) Inventor: TOMÁS BOIX, Rafael, 46250 La Alcudia, Valencia (ES)
(74) Representative: Ungria Lopez, Javier
(86) International application number: PCT/ES2007/000624
(87) International publication number: WO 2008/056009

(57) **Abstract**

The invention relates to a gantry-type washing installation (1) including an upper longitudinally movable bridge (2) having two transversely movable vertical rollers (5) mounted thereto. The longitudinal movement combined with the transverse movement of the rollers (5) enables the front, rear and sides of a vehicle to be washed. According to the inventive method, the vehicle advances towards the installation (1) and stops therein in order for the front part of the vehicle to be washed. The vehicle then advances again so that the sides can be washed and subsequently stops so that the rear part can be washed. All of the aforementioned washing operations are performed by the single pair of rollers (5) included in the installation, although another pair of vertical rollers (10) and an upper roller (7) can also optionally be provided.

## Description

### OBJECT OF THE INVENTION

The present invention refers to a vehicle washing method based on a series of operational steps, some of them taking place while the vehicle is in motion and others while the vehicle is stationary, through which existing conventional vehicle washing processes have been optimized.
The corresponding installation required to carry out the method is also an object of the invention. This installation is based on a fixed gantry-type devise and a pair of vertical rollers that can move both transversally and longitudinally to wash the frontal, rear and lateral sides of the vehicle.
The method and the installation are particularly applicable to wash buses, trucks and similar vehicles that may or may not have "horn-type" rear view mirrors, without ruling out their applicability for washing other types of vehicles.

### BACKGROUND OF THE INVENTION

There are two large types of vehicle washing machines or installations. One is the classic tunnel car wash inside which the vehicles move forward longitudinally and another type known as gantry-type or bridge-type, which comprise a gantry-type structure that moves longitudinally forward and backward on guide rails set on the ground, so in this type of installation or gantry structure the vehicles remain stationary and the washing operation is achieved through the movement of said gantry structure over the vehicle.

US Patent US 4450600 can be cited in reference to this type of system since it describes an installation provided with rollers for washing the lateral and rear sides of the vehicle, also including rollers for washing the wheels and rollers for washing the upper part or roof of the vehicle, as well as mechanical means to actuate the various rollers. This installation, in addition to require other elements to attain the washing operation, has the disadvantage that is structurally complex as a whole, independently of it not including means to allow it washing vehicles that have horn-type rear view mirrors or in which the front part protrudes outward, as is the case for many buses as currently manufactured and used.

On the other hand, and in what regards the washing method, the process most commonly used is that in which the vehicle moves along the installation and the sides are washed by two fixed rollers fitted laterally in the structure while the front is washed first by other pair of rollers mounted on basculating arms that allows them to first converge on the frontal side to wash that part of the vehicle and then diverge to allow the vehicle to go through so the last step of the washing cycle is washing the rear side where said pair rollers converges again to complete the process.

Said process requires a set of rollers for the lateral washing and another set for the frontal and rear washing, which entails a lack of process optimization.

### DESCRIPTION OF THE INVENTION

The method object of the invention is based on one pair of roller washing, the entire vehicle except for the top part or roof in the following operational steps:
a) The vehicle moves forward until it reaches the start of the work area of the installation.
b) The vehicle stops at said starting area.
c) The frontal part of the vehicle is washed after the washing means have moved to position themselves at said frontal part while the vehicle is stationary.
d) The frontal washing means remove themselves from the frontal area of the vehicle by traveling in a transversal path that allows them to reach the sides of the vehicle.
e) The vehicle moves forward again to allow the sides to be washed by the same means that have just washed its frontal part, until its rear part reaches the washing means.
f) The vehicle stops again and the washing means move transversally and longitudinally to reach the rear side of the vehicle.
g) The washing means proceed to wash the rear part of the vehicle while the latter remains stationary.
h) The vehicle moves forward again until it exits the work area of the installation and the washing means move back to the initial starting position.

The installation required to set up the method as described comprises an open and fixed structure having a general gantry-type rectangular prismatic configuration which sides can be closed by means of respective screens made of canvas or similar material.

Said structure will be made out of, preferably, galvanized steel. A movable bridge that can move longitudinally is mounted on the upper part of said structure fitted with two supporting elements to hold the vertical washing rollers, said supporting elements being mounted on guide rails to allow for transversal movement and therefore to allow the transversal movement of the rollers.

In this manner the rollers are enabled to move both longitudinally and transversally to adapt to the vehicle's shape and be able to wash the frontal, sides and the rear parts of said vehicle.

Optionally, the structure may also include an upper horizontal roller to wash the vehicle's roof. This roller can be mounted in a basculating manner so it can adapt to the upper surface or roof of the vehicle.

A second pair of vertical rollers may also be incorporated in correspondence with the rear part of the structure and mounted also in a basculating manner so they can cooperate in the sides-washing step.

According to the above information regarding the method, and based on the characteristics of said installation, the vehicle washing operation can be achieved in two stops during which the frontal and rear parts will be washed and the sides will be washed as the vehicle moves forward from the starting place of the work area to the finishing place.

The washing operation can also be done as the vehicle traverses the work area, that is, without requiring it to stop.

The longitudinal motion of the vertical rollers assembly bridge and the transversal motion of the supporting elements of said rollers, together with their rotating motion are all achieved by means of the corresponding motoreducers,

In the same manner, the optional upper horizontal rollers and the rear vertical rollers will also be assisted by their respective motors to enable them to rotate, as they are mounted on arms that enable a basculating motion.

The installation that has been described as an static gantry with its washing rollers is equally valid to wash vehicles that move in an uninterrupted manner, that is, the vehicle moves forward without stopping while the gantry remains stationary and the washing operation is achieved by the rotating motion of the cylinders as mentioned above, both the vertical and the horizontal elements, while only the frontal and the vertical cylinders move.

### BRIEF DESCRIPTION OF THE DRAWINGS

To complement the description provided below and to contribute to a better understanding of the characteristics of the present invention a set of drawings has been attached to the present descriptive memory. Said drawings will facilitate a better understanding of the innovations and advantages provided by the installation method object of the present invention.
**Figure 1****.-** Shows the sequence of events corresponding to the different steps of the working process according to the method object of the invention.
**Figure 2****.**- Shows a representation of a general perspective of the installation required to implement the washing method object of the invention.

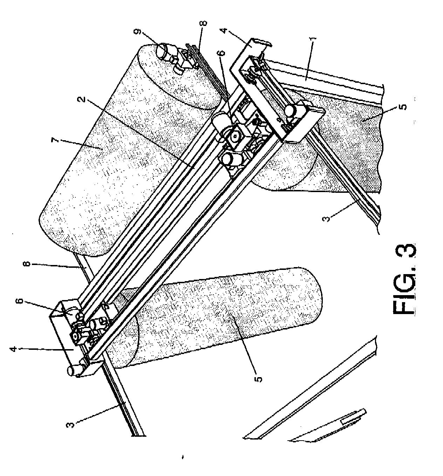

**Figure 3****.-** Shows another perspective view from the upper part of the same installation represented in the previous figure.
**Figure 4****.-** Shows a perspective view of the installation shown in figures 2 and 3 also showing the added optional elements comprising the rear lateral rollers and the upper roller.
**Figure 5****.**- Shows a view of the continuous washing operational mode, that is, the mode in which the vehicle moves forward continuously without stopping, showing the operative steps of the washing cylinders.

### DESCRIPTION OF THE PREFERRED EMBODIMENT OF THE INVENTION

The characteristics first described will be that of the vehicle washing installation followed by the description of the steps involved in the process.

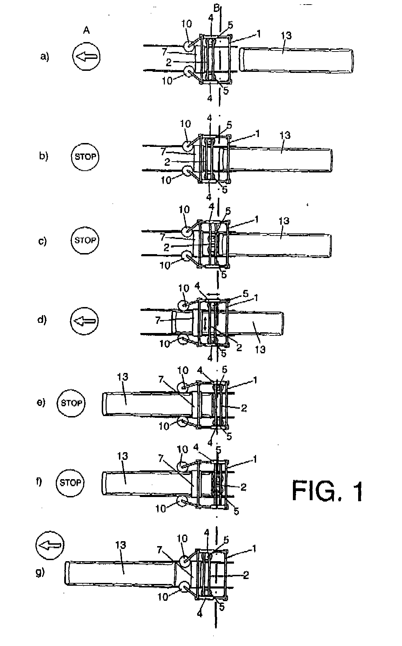

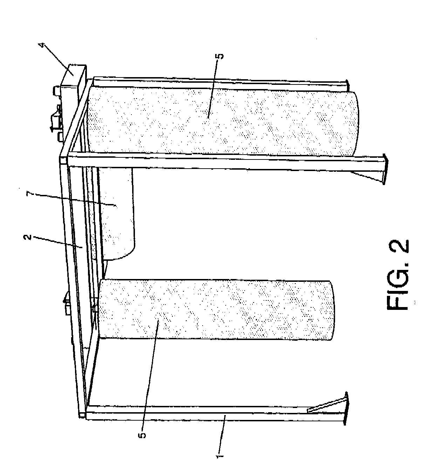

In this sense, and in relation to figures 1 and 2, it can be seen how the installation is constituted by a structure 1, preferably made from galvanized steel, which forms a type of rectangular prismatic gantry completely open, on both the sides and the upper part. The sides of this structure can be closed using canvas blinds or any other appropriate system. The system also incorporates on the upper part a transversal bridge 2 that can move longitudinally on the corresponding guides 3 mounted on upper longitudinal beams and lateral to the structure 1, a sliding motion that is effected by meals of end supporting elements 4 solidarious to the aforementioned bridge 2.

Also mounted on said bridge are two vertical rollers 5 that can move longitudinally as a result of the traveling path of bridge 2, as well as being able to move transversally to come closer and apart because the vertical rollers support element is a movable element that can move over a transversal rail guide established to that effect on bridge 2.

Both the longitudinal and transversal movements of these elements are effected by means of the respective motoreducers 6.

Optionally, the described installation can be complemented with an upper and horizontal roller 7 mounted in a basculating manner over the corresponding side arms 8, which rotating motion is actuated by the corresponding motoreducer 9. The function of said upper and horizontal roller 7 is to wash the roof of the vehicle in question from above.

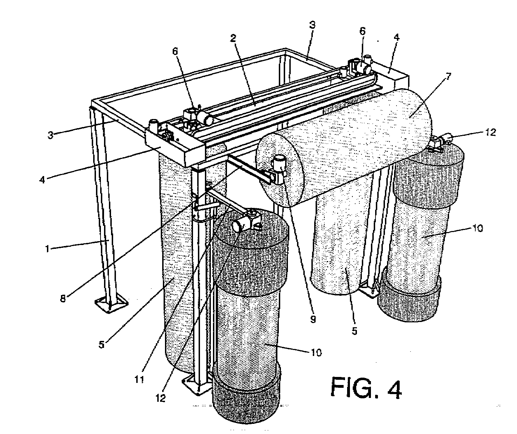

Also optionally, as represented in figure 4, structure 1 can also incorporate a pair of vertical rollers 10, corresponding to the previous area of the installation. These rollers are also assembled over laterally placed arms 11 that make possible the basculating motion of said rollers 10, which rotating motion is also actuated by the corresponding motoreducers 12.

Optional rollers 7 and 10 are designed to wash the upper part of the vehicle and to cooperate in the washing of the sides of said vehicle, since both the washing action for the frontal area and the sides as well as the rear part of the vehicle is done by the main vertical rollers 5 first mentioned. Based on this the sequence of the work steps are as follows:
Figure 1 shows in step a) a vehicle 13, such as a bus, as it moves forward to structure 1, while bridge 2 has moved at its furthest forward-going position.

Step b) shows vehicle 13 already at the starting position 1 or work area, at the moment in which a signaling device alerts the driver to bring the vehicle to a halt, while bridge 2 sets in motion traveling backwards until vertical rollers 5 reach the position corresponding to the frontal part of vehicle 13, at which time said rollers 5 move transversally and position themselves over said frontal part of vehicle 13, as shown in step c), when the system proceeds to wash said frontal part of vehicle 13. Was the vehicle not to stop at that point, the rollers will not act, remaining open in order to not cause any damages.

The next step entails vehicle 13 starting again its forward-going traveling path and going through the installation of structure 1 according to step d) at which time optional vertical rollers 10 mounted in a basculating manner over the installation or structure 1, cooperate in the operation by washing the sides of vehicle 13, a part of the washing cycle done by vertical rollers 5 since, before vehicle 13 initiates the forward movement corresponding to step d), they have already traveled transversally outwards to reach the position corresponding to the sides of vehicle 13 to wash said sides of the vehicle as part of said step d) and step e), during which the sides are washed until vehicle 13 reaches the finishing point of the installation or structure 1. At this point, bridge 2 carrying with it rollers 5 moves longitudinally and backwards while vertical rollers 5 also travel transversally to reach the position corresponding to the rear part of vehicle 13, at which point the carry out the washing operation of said rear part while the vehicle is stationary as per the protocol for step f).

Once the operation has been completed vehicle 13, following the actions designed for step g) starts moving again to exit the installation, and then the entire system returns to the starting position or step a) remaining ready to receive the next vehicle and start the washing operation again.

While the vehicle inside the installation is moving during steps d), e) and f), the upper horizontal roller 7 washes the roof of said vehicle 13 while vertical rollers 10, as mentioned above, cooperate in steps d), e) and f) washing the sides of vehicle 13, which is a cycle of the washing operation also carried out by the main rollers 5.

Finally, it should be noted that figure 1 shows a traffic light A icon showing the particular stop-go signal corresponding to the various steps of the progress and therefore corresponding with the steps when the vehicle is moving and/or stopping. This figure also shows an intermittent vertical line B representing the vehicle while stops.

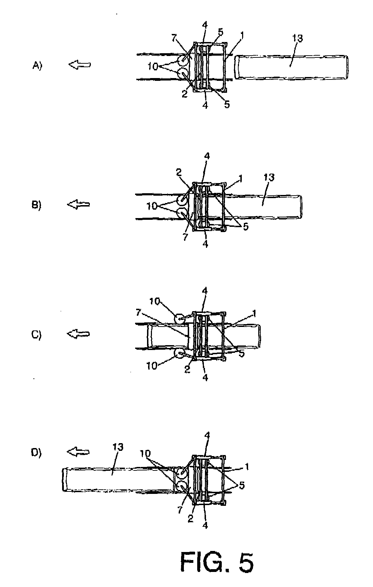

Figure 5 shows the operational sequences the rollers go through to wash the vehicle as the latter advances continually through the installation so that side rollers 5 and upper roller 7 will remain static as does the structure or gantry 1, although said rollers or cylinders will rotate in place to carry out the washing cycle, this not withstanding, frontal rollers 10, in addition to effecting their rotating motion will be amovable in order to be able to wash the frontal washing of the vehicle (sequence B), the sides (sequence C) and the rear (sequence D) of vehicle 13, sequence A being the initial sequence or that prior to the vehicle entering the installation.

## Claims

1. **METHOD FOR WASHING VEHICLES** such as buses, trucks and similar vehicles that are likely to have a protruding frontal part or even "horn-type" rear view mirrors, **characterized in that** it comprises the following steps:
**a)** The vehicle moing forward until it reaches a work area where the washing operation will be carried out,
**b)** The vehicle coming to a halt when it reachs a starting position in the work area,
**c)** The frontal part of the vehicle being washed while the vehicle remains stationary after the washing means have traveled to position themselves over said frontal part of the vehicle,
**d)** The washing means being remove themselves from the frontal part of the vehicle to position themselves over the sides of said vehicle while the latter advances so the sides can be washed,
**e)** The vehicle coming to a halt once its rear part has reached the final area of the work area,
**f)** The rear part of the vehicle being washed after the washing means have moved to position themselves over said rear part,
**g)** The vehicle moving until it exits the work area and the washing means retreating to their original starting position.

2. **INSTALLATION FOR WASHING VEHICLES** designed to implement the method described in the previous claim, **characterized in that** it comprises a gantry-like structure (1), over which upper part a bridge (2) capable of moving longitudinally is mounted and in which the ends of said bridge (2) are fitted with respective supporting elements (4) capable of moving longitudinally on respective guides (3) mounted on the structure (1), to carry out the longitudinal motion of the bridge (2), and having a pair of vertical rollers (5) mounted on said bridge (2) an in which said rollers (5) are capable to move transversally in order to come together or apart to wash the frontal part, the lateral sides and the rear part of vehicle (13).

3. **INSTALLATION FOR WASHING VEHICLES** according to claim 2 **characterized in that** a horizontal and basculating roller (7) can be mounted optionally on said structure (1) to enable it to wash the upper part or roof of the vehicle (13).

4. **INSTALLATION FOR WASHING VEHICLES** according to claim 2 **characterized in that** a pair of vertical and lateral frontal rollers (10) can be mounted optionally on said structure (1) over respective arms (11) that enable said frontal rollers (10) to basculate in order to cooperate in the washing operation of the sides of the vehicle (13).

5. **INSTALLATION FOR WASHING VEHICLES** according to claims 2 to 4 **characterized in that** the structure (1) is a fixed structure and is preferably made of galvanized steel.

6. **INSTALLATION FOR WASHING VEHICLES** according to any of claims 2 to 5 **characterized in that** the sides of the structure (1) can be enclosed by means of blinds made of canvas or other similar materials.

7. **INSTALLATION FOR WASHING VEHICLES** according to any of claims 2 to 6 **characterized in that** the vehicle (13) moves, while advancing forward through the gantry configured by structure (1), in a continuous manner while the vertical rollers (5) and the upper roller (7) remain static, and in which the frontal rollers (10) are amovable in what pertains the operations for washing the frontal, sides and rear parts of the vehicle (13).
